# EUROPÄISCHE PATENTANMELDUNG

(11) **EP 0 641 630 A1**
(43) Veröffentlichungstag der Anmeldung: **08.03.1995**
(21) Anmeldenummer: 94112794.6
(22) Anmeldetag: 17.08.1994
(51) Int. Cl.: B26D 5/00

(54) **Verfahren und Vorrichtung zur Ueberwachung und Registrierung der Arbeitsabläufe an Papierschneidemaschinen**

(30) Priorität: 06.09.1993 DE 4329883
(71) Anmelder: Adolf Mohr Maschinenfabrik GmbH & Co. KG, D-65719 Hofheim am Taunus (DE)
(72) Erfinder: Mohr, Wolfgang, D-65719 Hofheim/Taunus (DE)
(74) Vertreter: Quermann, Helmut, Dipl.-Ing.

(57) **Zusammenfassung**

Die vorliegende Erfindung betrifft ein Verfahren und eine Vorrichtung zur Überwachung und Registrierung des Arbeitsablaufes an einer oder mehreren Papierhandhabungs- und Schneidemaschinen, wobei derartige Maschinen mindestens einen Sattel für den Vorschub eines Papierrieses aufweisen, wobei die Sattelposition über eine Meß- bzw. Sensoreinrichtung erfaßt und einer Datenverarbeitungsstation zugeleitet wird. Um ein Verfahren und eine Vorrichtung mit den eingangs genannten Merkmalen zu schaffen, die es dem Betreiber jederzeit ermöglichen, sich in leichter und anschaulicher Weise einen Überblick über den aktuellen Stand, über bereits erledigte und noch zu erledigende Arbeitsschritte zu verschaffen, um erforderlichenfalls eingreifen zu können und um zum Beispiel weitere, verbesserte Planungen vorzunehmen und insbesondere auch das Steuerprogramm der Maschine zu optimieren, wird erfindungsgemäß vorgeschlagen, daß der Sattelposition in einem mindestens zweidimensionalen Koordinatensystem eine dieser Koordinaten zugeordnet wird, während eine andere Koordinate der Zeit zugeordnet wird, wobei die sich aus den beiden Koordinaten ergebende Position auf einer im wesentlichen ebenen Bildfläche (zum Beispiel Bildschirm oder Papierbahn) wiedergegeben wird.

## Beschreibung

Die vorliegende Erfindung betrifft ein Verfahren und eine Vorrichtung zur Überwachung und Registrierung des Arbeitsablaufes an einer oder mehreren Papierhandhabungs- und Schneidemaschinen, wobei derartige Maschinen mindestens einen Sattel für den Vorschub eines Papierrieses aufweisen und wobei außerdem die Sattelposition über eine Meß- bzw. Sensoreinrichtung erfaßt und einer Datenverarbeitungsstation zugeleitet wird.

Derartige Verfahren und Vorrichtungen sind an sich bereits bekannt. Papierhandhabungs- und Schneidemaschinen finden zum Beispiel breite Anwendung in Druckereien und Buchbindereien. Dabei sind im Zuge der technischen Weiterentwicklung auch die Anforderungsprofile an die Papierhandhabungs- und Schneidemaschinen komplexer und höher geworden, wobei sich ein Hauptaugenmerk auch auf die Verarbeitungsgeschwindigkeit bzw. -kapazität und Effektivität der Maschinen richtet. Es sind deshalb computergesteuerte Maschinen entwickelt worden, welche aufgrund der Eingabe von Rahmendaten, die Art und Umfang eines Auftrages, vor allem hinsichtlich der einzelnen Vorschub-Dreh- und Schneidevorgänge, genau festlegen und mit Hilfe ihrer Programmierung eine optimale Reihenfolge der einzelnen Arbeitsschritte festlegen und die Maschine nach einem entsprechenden Ablaufprogramm steuern.

Dabei können zwischenzeitlich selbstverständlich auch Pausen für erforderliche Umrüstvorgänge oder für zusätzliche Dateneingaben vorgesehen sein und es ist im allgemeinen jederzeit auch ein Eingriff in den Arbeitsablauf und eine manuelle Steuerung der Maschine möglich. Der Arbeitsplan, der von dem Programm einer solchen programmgesteuerten Maschine aufgrund der eingegebenen Rahmendaten erstellt wird, kann gegebenenfalls auch bei voll- oder halbautomatischem Betrieb durch die Maschine überwacht und registriert werden, da bei einem halb- oder vollautomatischem Betrieb die Maschine selbstverständlich "wissen" muß, ob ein bestimmter Schritt in dem vorgesehenen Arbeitsablauf beendet ist und welcher Arbeitsvorgang gerade zur Ausführung ansteht. Insofern stellen derartige Anlagen und ihr Betrieb bereits ein Verfahren und eine Vorrichtung zur Überwachung und Registrierung des Arbeitsablaufes mit den eingangs genannten Merkmalen bereit, und die vorliegende Erfindung geht von diesem Stand der Technik aus.

Bei den bisher bekannten Maschinen und Verfahren ist ein wirklich vollautomatischer Betrieb nur bei relativ einfachen Vorgängen möglich. Die meisten Handhabungs- bzw. Schneidaufträge, wie sie mit der Herstellung von Druckerzeugnissen verknüpft sind, erfordern jedoch bis zur endgültigen Erledigung eines Auftrages Eingriffe von außen, wie zum Beispiel das Umrüsten von Schneidmaschinen mit anderen Schneidwerkzeugen, anderen Vorschub- oder Handhabungseinrichtungen, beispielsweise um Drehungen oder ein Verkippen in mehreren Ebenen zu ermöglichen, etc. Die bisherigen Verfahren und Vorrichtungen erfassen diese Vorgänge allenfalls als Wartezeit und für den Betreiber entsprechender Anlagen fehlt es vor allem an einer anschaulichen Übersicht bezüglich der bereits erledigten und noch zu erledigenden Arbeitsschritte im Rahmen eines bestimmten Auftrages. Die entsprechenden Daten über bereits erledigte und noch zu erledigenden Arbeitsschritte sind zwar im allgemeinen in der Maschine gespeichert, sind jedoch nicht oder zumindest nicht in einer leicht verständlichen, anschaulichen Weise verfügbar.

Die vorliegende Erfindung hat sich daher zum Ziel gesetzt, ein Verfahren und eine Vorrichtung mit den eingangs genannten Merkmalen zu schaffen, die es dem Betreiber jederzeit ermöglichen, sich in leichter und anschaulicher Weise einen Überblick über den aktuellen Stand, über bereits erledigte und noch zu erledigende Arbeitsschritte zu verschaffen, um erforderlichenfalls eingreifen zu können und um zum Beispiel weitere, verbesserte Planungen vorzunehmen und insbesondere auch das Steuerprogramm der Maschine zu optimieren.

Hinsichtlich des eingangs genannten Verfahrens wird diese Aufgabe dadurch gelöst, daß der Sattelposition in einem mindestens zweidimensionalen Koordinatensystem eine dieser Koordinaten zugeordnet wird, während eine andere Koordinate der Zeit zugeordnet wird und wobei ein sich aus diesen Koordinaten ergebendes Bild auf einer im wesentlichen ebenen Bildfläche, wie zum Beispiel einem Bildschirm oder einer Papierbahn, aufgezeichnet wird. Für die Aufzeichnung des betreffenden Koordinatenpunktes gibt es verschiedene Möglichkeiten. So könnten beispielsweise die Zeitkoordinate und die Sattelpositionskoordinate lediglich als Punkt (das heißt auf einem Bildschirm als Leuchtpunkt oder als Tintenpunkt auf der Papierbahn eines Zeitschreibers) wiedergegeben werden. Ebenso wäre jedoch auch eine Vektordarstellung möglich, mit Hilfe eines Vektors, der vom Koordinatenursprung ausgeht und an dem durch die Koordinaten definierten Endpunkt endet.

Bevorzugt ist jedoch eine Variante des Verfahrens, bei welcher die konkrete Darstellung in dem zweidimensionalen Koordinatensystem von den konkret ablaufenden Arbeitsschritten abhängt. So wird beispielsweise eine Änderung der Sattelposition gekennzeichnet durch eine gerade Linie, welche der Vektorkomponente der Sattelposition entspricht und zwar als Linie, die sich bei einem festen Zeitpunkt, das heißt, senkrecht zur Zeitachse verlaufend, von der Zeitachse oder "Nullinie" bis zu der Sattelpositionskoordinate erstreckt. Falls nur ein kleinerer Abschnitt der Sattelpositionskoordinaten benötigt wird, kann auch eine Nullpunktsunterdrückung vorgesehen werden, d. h. die "Nullinie" wird durch eine zur Zeitachse parallele Linie ersetzt. Dabei entspricht die Zeitkoordinate, bei welcher die Linie liegt, zum Beispiel einem Zeitpunkt, der dadurch definiert ist, daß innerhalb eines vorgebbaren Zeitintervalls keine meßbare Verschiebung oder höchstens eine unterhalb eines ebenfalls vorgebbaren Schwellwertes liegende Verschiebung der Sattelposition stattgefunden hat, wogegen in einem davor liegenden, entsprechenden Zeitintervall noch eine Verschiebung feststellbar war. Umgekehrt kann die Darstellung der Sattelposition durch eine solche Linie auch zu einem Zeitpunkt erfolgen, bei welchem ein Übergang des Sattels aus einer Ruheposition in einen sich verändernden Bewegungszustand stattfindet. Generell kann ein entsprechender Zeitpunkt des Übergangs von einer Verschiebebewegung des Sattels in den Ruhezustand und umgekehrt zum Beispiel dadurch definiert werden, daß zwei benachbarte Zeitintervalle vorgebbarer Länge betrachtet werden, wobei die Darstellung der Sattelposition mittels der Vektorkomponente der Sattelposition dadurch festgelegt wird, daß während des einen Zeitintervalls keine meßbare Veränderung der Sattelposition stattgefunden hat, wogegen in dem benachbarten Zeitintervall sehr wohl eine solche Änderung der Sattelposition stattgefunden hat. Mit diesem Kriterium lassen sich Beginn und Ende der Verschiebung der Sattelposition festlegen und jeweils durch eine senkrecht zur Zeitachse verlaufende Linie markieren, deren Länge der aktuellen Sattelposition entspricht.

Weiterhin ist eine Variante der Erfindung bevorzugt, bei welcher ein Schneidvorgang als parallel zur Zeitachse verlaufende Linie bei einer festen Sattelposition wiedergegeben wird, wobei die betreffende Linie von dem Koordinatenpunkt der festen Sattelposition vor dem Beginn des Schnittes ausgeht, wobei die Länge dieser Linie parallel zur Zeitachse gerade der Dauer des Schnittes entspricht. Auch hier wird in der bevorzugten Variante der Erfindung zu Beginn und Ende eines Schneidvorganges die Sattelposition durch eine zur Zeitachse senkrechte Linie wiedergegeben, die sich von der Nullinie bis zur Sattelpositionskoordinate erstreckt. Das Kriterium für die Darstellung einer solchen Linie kann wiederum analog zum Erfassen von Beginn und Ende der Sattelbewegung gewählt werden, indem eine Bewegung eines Schneidmessers durch Vergleich von Positionsmessungen in benachbarten Zeitintervallen festgestellt wird. Alternativ können Bewegungen des Schneidsystems jedoch auch einfach durch Lichtschranken oder Berührungskontakte festgestellt werden, wobei dieses jedoch nicht die Darstellung einer Messerposition, sondern wiederum die Darstellung der aktuellen Sattelposition zuzüglich der "Schneidlinie" parallel zur Zeitachse auslöst, wie oben beschrieben.

Eine Änderung der Sattelposition wird vorzugsweise auch durch einen Verlauf der Sattelposition als Spur der Koordinatenzeit und Sattelposition wiedergebeben. Einfacher und weniger speicheraufwendig ist jedoch eine Variante dieses Verfahrens, bei welcher lediglich die Koordinaten des Anfangs- und Endpunktes der Sattelposition in der zweidimensionalen Weg-Zeitebene erfaßt werden, wobei diese beiden Endpunkte lediglich durch eine gerade Linie miteinander verbunden werden.

Als zweckmäßig hat es sich erwiesen, wenn Zeitabschnitte, während derer keine Änderung der Sattelposition und auch kein Schneidvorgang stattfindet, nicht bzw. als Nullinie der Sattelposition auf der Zeitachse dargestellt werden. Bei solchen Zeitabschnitten handelt es sich also um Unterbrechungen der übrigen Darstellungen, die aus senkrechten Linien bestehen, welche bei unterschiedlicher Länge entweder durch Schräglinien miteinander verbunden sind, was dem Ändern der Sattelposition entspricht, oder welche bei gleicher Länge durch gerade Linien miteinander verbunden sind, was einem Schneidvorgang entspricht.

Diese Zeitabschnitte ohne derartige Linien sind im allgemeinen Warte- oder Umrüstzeiten. Dabei ist erfindungsgemäß vorgesehen, daß zu derartigen Zeitabschnitten eine manuelle oder automatische Dateneingabe über zusätzliche Arbeitsschritte erfolgt, die während dieser Zeitabschnitte, in welchen keine Änderung der Sattelposition und auch kein Schneidvorgang stattfindet, vorgenommen werden.

Dabei ist weiterhin eine Variante der Erfindung bevorzugt, bei welcher derartige Informationen über zusätzliche Arbeitsschritte auf einem Darstellungsbildschirm in einem wahlweise zu öffnenden Fenster getrennt dargestellt werden können.

Besonders vorteilhaft kann die vorliegende Erfindung zur Anwendung kommen, wenn gleichzeitig mehrere Maschinen mit einer, oder gegebenenfalls auch mehreren, Datenverarbeitungsanlagen verbunden sind, wobei der Arbeitsablauf auf jeder der Maschinen entweder getrennt auf verschiedenen Bildschirmen dargestellt wird, oder wobei ein Bildschirm umgeschaltet werden kann, um wahlweise den Arbeitsablauf auf irgendeiner der Maschinen auf diesem Bildschirm darzustellen. Dabei kann weiterhin vorgesehen sein, daß auf einem Bildschirm die Arbeitsabläufe von mehreren Maschinen gleichzeitig übereinander oder aber in perspektivischer Darstellung hintereinander geschachtelt wiedergegeben werden. Auch bei Verwendung eines Mehrkanalzeitschreibers ergibt sich zwanglos eine gleichzeitige Darstellung der Arbeitsabläufe an mehreren verschiedenen Maschinen.

Besonders bevorzugt ist eine Ausführungsform der Erfindung, bei welcher die für die vorstehend erwähnten Darstellungen erforderlichen Daten gespeichert werden, vorzugsweise in komprimierter Form, das heißt also im Falle der Speicherung gerader Linien einfach durch Speicherung der Anfangs- und Endpunkte der Linien mit der zusätzlichen Information, daß diese Endpunkte durch eine Linie zu verbinden sind.

Auf diese Weise ist es möglich, Arbeitsabläufe an Maschinen auch im nachhinein noch zu analysieren, Fehlerquellen, und vor allem lange Umrüst- oder Wartezeiten aufzudecken und auch statistische Auswertungen zu betreiben, so daß künftige Arbeitsabläufe optimiert werden können.

Bezüglich der eingangs genannten Vorrichtung wird in analoger Weise die der Erfindung zugrundeliegende Aufgabe dadurch gelöst, daß eine Wiedergabeeinrichtung für die grafische Wiedergabe der Sattelposition über der Zeit vorgesehen ist. Mit "Wiedergabeeinrichtung" ist dabei im vorliegenden Fall nicht allein ein Datensichtgerät, wie zum Beispiel ein Bildschirm oder ein Zeitschreiber gemeint, sondern auch das zugehörige Programm, welches erst den Arbeitsablauf in eine entsprechende grafische Darstellung umsetzt.

Unter den in Frage kommenden Vorrichtungen sind wiederum solche bevorzugt, bei welchen mehrere Maschinen über eine oder mehrere Datenverarbeitungsstationen und ein entsprechendes Steuerprogramm miteinander vernetzt sind. Gerade bei derart komplexen Anlagen können die Vorteile einer schnellen Erfassung der Arbeitsabläufe auf den einzelnen Maschinen voll zur Geltung kommen, indem Störungen oder die geringe Effizienz einer bestimmten Maschine viel schneller erkannt und erforderlichenfalls behoben werden können.

Die erfindungsgemäße Vorrichtung weist in einer bevorzugten Ausführungsform weiterhin Einrichtungen auf, welche Beginn und Ende eines Schneidvorganges erfassen und registrieren und ebenso auch Einrichtungen, welche Beginn und Ende eines Verschiebeund/oder Verdrehvorganges des Sattels einer Maschine erfassen und registrieren. Derartige Einrichtungen lassen sich sowohl mittels Hardware als auch mittels Software realisieren und sind im allgemeinen Kombinationen aus beiden Elementen. So kann Beginn und Ende des Verschiebes des Sattels beispielsweise durch Sensoren erfaßt werden, die die Stromzufuhr zu einem entsprechenden Verschiebemotor überwachen. Da jedoch ohnehin eine Meßeinrichtung für die Erfassung der Position des Sattels vorhanden ist, können Beginn und Ende eines Verschiebevorganges auch softwaremäßig erfaßt werden, zum Beispiel nach dem oben bereits beschriebenen Verfahren, indem jeweils kurze, benachbarte Zeitintervalle betrachtet werden, wobei Beginn oder Ende einer Positionsänderung des Sattels jeweils dadurch definiert ist, daß in dem einem Zeitintervall eine meßbare Verschiebung der Sattelposition stattfindet, während in dem anderen Intervall eine solche meßbare Positionsänderung nicht stattfindet. In diesem Fall stellt also die Einrichtung zum Erfassen von Beginn und Ende eines Verschiebevorganges eine Kombination aus Hard- und Softwareelementen dar. Bei besonders großen und komplexen Anlagen, die gegebenenfalls auch von einem zentralen Steuerstand aus überwacht und beeinflußt werden können, kann es zweckmäßig sein, wenn zur gleichzeitigen, parallelen Darstellung der Arbeitsabläufe auf mehreren Maschinen mehrere Datensichtgeräte bzw. Bildschirme vorgesehen sind, wobei gegebenenfalls jeder Maschine ein eigener Bildschirm zugeordnet ist.

Weitere Vorteile, Merkmale und Anwendungsmöglichkeiten der Erfindung werden deutlich aus der folgenden genauen Beschreibung grafischer Darstellungen, welche schematisch Arbeitsabläufe wiedergeben.

Es zeigen:

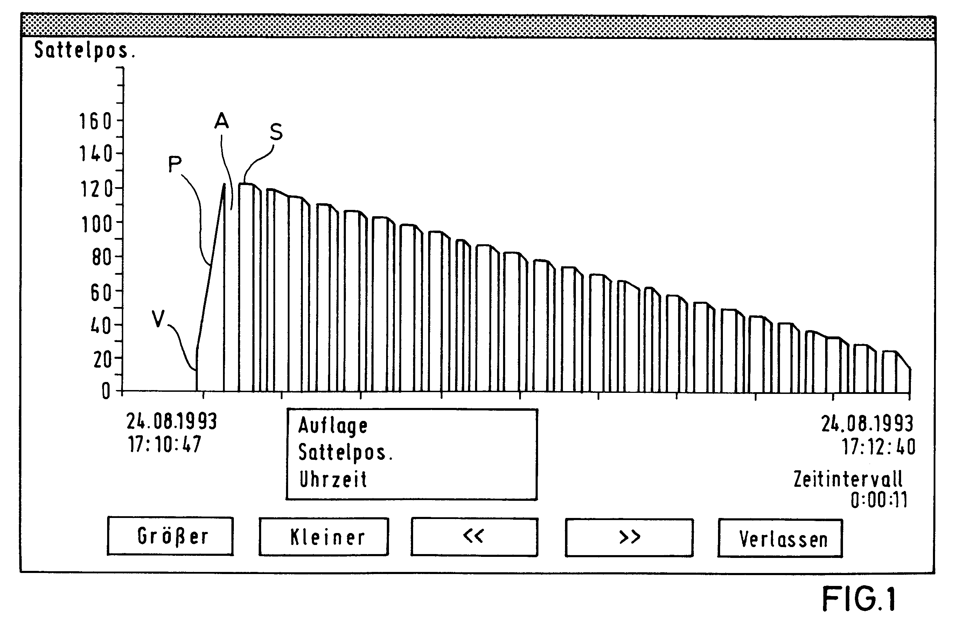

- Figur 1: die grafische Wiedergabe einer Folge von Arbeitsschritten, wie sie auf einem Bildschirm darstellbar ist und
- Figur 2: eine entsprechende Darstellung mehr realistischer Arbeitsabläufe.

Die beiliegende Grafik enspricht einer sogenannten Bildschirmmaske, die entweder in schwarz-weiß oder auch farbig auf einem Bildschirm wiedergegeben wird und hier lediglich in schwarzen Linien auf weißem Grund wiedergegeben werden kann. Man erkennt ein Koordinatensystem, welches in vertikaler Richtung eine Sattelposition in willkürlichen Einheiten (zum Beispiel Zentimeter) angibt, während auf der horizontalen Achse die Zeit wiedergegeben ist. Der insgesamt wiedergegebene Zeitabschnitt umfaßt entsprechend den gleichzeitig angegebenen Anfangs- und Enddaten einen Zeitraum von knapp zwei Minuten.

In dem Diagramm erkennt man zu Beginn eine vertikale Linie V, welche dem Zeitpunkt entspricht, zu welchem die Sattelposition sich von einem Punkt entsprechend einem Skalenwert von etwa 25 zu verändern beginnt, in Richtung eines größeren Skalenwertes von ca. 120. Diese Verschiebung des Sattels dauert einige Sekunden und ist als relativ steil ansteigende Linie P am linken Ende des Diagramms wiedergegeben. Das zeitliche Ende der Verschiebung des Sattels und seine Position werden wiederum durch eine vertikale Linie markiert, die auf der Zeitachse den Endpunkt des Verschiebevorganges markiert und deren Länge der aktuellen Sattelposition entspricht. Anschließend erkennt man eine Lücke bzw. Pause A, die zum Beispiel für einen Werkzeugwechsel benutzt wird. Eine erneute vertikale Linie markiert die Sattelposition zu Beginn eines Schneidvorganges, wobei der Schneidvorgang selbst als horizontale Linie S wiedergegeben wird, die bei der aktuellen Sattelposition beginnt und auch bei derselben Position endet und deren Länge der Dauer des Schneidvorganges entspricht. Anschließend verschiebt sich der Sattel etwas in Richtung kleinerer Skalenwerte, wobei Anfangs- und Endpunkte wiederum durch vertikale Linien mit der Länge der aktuellen Sattelposition markiert sind. Es folgt wiederum eine kurze Pause und anschließend ein erneuter Schnitt, der in diesem Beispiel zeitlich etwas kürzer ausfällt als der erste Schnitt, woraufhin wiederum eine Änderung der Sattelposition, erneut ein Schnitt und nochmals eine Änderung der Sattelposition erfolgen, bevor wieder eine kurze Pause eintritt. Im folgenden erkennt man eine ganze Serie von abwechselnden Schnitten, Änderungen der Sattelposition und jeweils anschließenden, kurzen Pausen. Es versteht sich, daß dies konkrete Diagramm nicht einem typischen Arbeitsablauf entspricht, bei welchem sich im allgemein ein wesentlich komplexeres Bild (auch Signatur genannt) ergibt. Festzuhalten ist, daß Beginn und Ende von Schneidvorgängen und auch Beginn und Ende der Änderung von Sattelpositionen jeweils durch eine vertikale Linie definiert sind, welche genau diesen Zeitpunkt des Beginns oder Endes wiedergibt, wobei Schneidvorgänge zusätzlich noch durch ihren zeitlichen Verlauf als horizontale Linien wiedergegeben werden, da sich hierbei die Sattelposition selbstverständlich nicht ändert. Es versteht sich, daß das gezeigte Diagramm auch lediglich als Umrißdiagramm dargestellt werden könnte und daß es nicht erforderlich ist, Beginn und Ende der Schneid- und Verschiebevorgänge jeweils durch vertikale Linien zu markieren. Ebenso könnten Beginn und Ende auch durch Änderung von Farbe markiert werden, so daß die hier durch vertikale Linien begrenzten Flächen dann als Balken bzw. Säulen erscheinen würden. Derartige farbige Darstellungen würden im übrigen auch das Erkennen von Pausen erleichtern und liegen ohne weiteres im Rahmen der vorliegenden Erfindung.

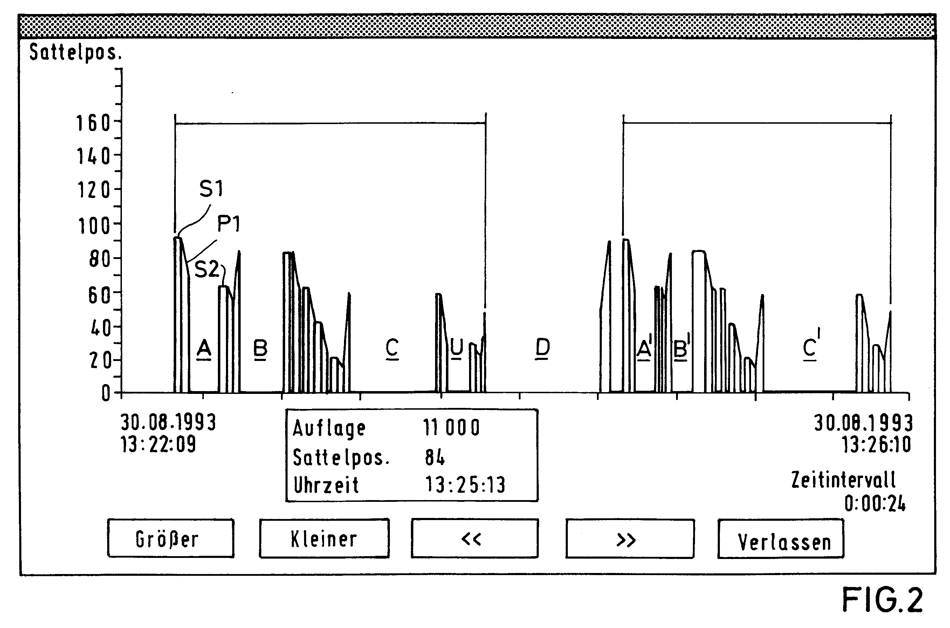

In Figur 2 erkennt man den Ablauf eines sich zweimal wiederholenden und in diesem Falle mehr realistischen Schneidprogrammes. Zur besseren Kennzeichnung von Beginn und Ende des Programmablaufes sind zwei zusätzliche Rahmen eingezeichnet worden, die ansonsten bei der Darstellung auf dem Bildschirm fehlen. Das Schneidprogramm beginnt mit einem Schnitt S1, gefolgt von einer Positionsverschiebung P1 und einer Warte- oder Umrüstzeit A, auf welche wiederum ein Schneidvorgang S2 folgt. Die weiteren Positionsveränderungen und Schneidvorgänge, die im einzelnen nicht bezeichnet sind, sind noch von Warte- oder Umrüstzeiten B und C unterbrochen. Kürzere Arbeitspausen sind nicht ausdrücklich gekennzeichnet. Mit D ist dann wiederum ein Zeitabschnitt bezeichnet, der die Vorbereitungszeit für eine Wiederholung desselben Schneidprogramms an einem neuen Papierries markiert. Hierzu gehört auch wiederum eine Verschiebung der Sattelposition auf den Ausgangswert für den Schnitt S1. Wie man an dem Arbeitsablauf in dem rechts eingerahmten Teil erkennt, läuft auch hier die gleiche Folge von Arbeitsschritten ab, beginnend mit einem Schnitt in der gleichen Position, wie im linken Teilbild bei S1, gefolgt von einer Positionsänderung und einer Pause A' etc. Wie man erkennt, sind zumindest die Arbeitspausen oder Umrüstzeiten A' und B' kürzer als die entsprechenden Zeiträume A und B und die Unterbrechung U, die möglicherweise mit einer Störung zusammenhängt und im rechten Endabschnitt des linken Teilbildes zu erkennen ist, fehlt im rechten Teilbild fast ganz bzw. ist nur durch eine kurze Pause ersetzt. Wie man aus der Darstellung in Figur 2 erkennt, ist das Folgeprogramm gemäß dem rechten Teilbild in einer kürzeren Zeit abgelaufen als das erste Schneidprogramm in dem linken Teilbild. Dies läßt sich unmittelbar auf die kürzeren Pausen A', B' und den Fortfall der Pause U zurückführen, wobei man jedoch gleichzeitig auch erkennen kann, daß der Schneidvorgang im Anschluß an die Pause B' einen deutlich längeren Zeitabschnitt beansprucht als der entsprechende Schneidvorgang im Anschluß an die Pause B. Man sieht also, daß sich anhand dieser Darstellung die Arbeitsabläufe sehr gut analysieren lassen und daß man auf diese Weise zu einer qualitativen und quantitativen Bewertung der einzelnen Arbeitsschritte kommen kann, die eine Verbesserung und Steigerung der Produktivität erlaubt.

## Patentansprüche

1. Verfahren zur Überwachung und Registrierung des Arbeitsablaufes an einer oder mehreren Papierhandhabungs- und Schneidemaschinen, welche mindestens einen Sattel für den Vorschub eines Papierrieses aufweisen, wobei die Sattelposition über eine Meß- bzw. Sensoreinrichtung erfaßt und einer Datenverarbeitungsstation zugeleitet wird, **dadurch gekennzeichnet**, daß der Sattelposition in einem mindestens zweidimensionalen Koordinatensystem eine dieser Koordinaten zugeordnet wird, während eine andere Koordinate der Zeit zugeordnet wird, wobei die sich aus den beiden Koordinaten ergebende Position auf einer im wesentlichen ebenen Bildfläche (zum Beispiel Bildschirm oder Papierbahn) wiedergegeben wird.

2. Verfahren nach Anspruch 1, **dadurch gekennzeichnet**, daß unmittelbar nach einer Veränderung der Sattelposition die zu der Sattelposition gehörende Vektorkomponente des sich aus den Koordinaten ergebenden Datenvektors als gerade Linie dargestellt wird, wobei diese Linie bei der zugehörigen, festen Zeitkoordinate liegt.

3. Verfahren nach Anspruch 2, **dadurch gekennzeichnet**, daß die Zeitkoordinate für die Darstellung der Vektorkomponente der Sattelposition als gerade Linie jeweils dadurch definiert ist, daß innerhalb eines vorgebbaren Zeitintervalls keine meßbare Verschiebung oder höchstens eine unterhalb eines ebenfalls vorgebbaren Schwellwertes liegende Verschiebung der Sattelposition stattgefunden hat.

4. Verfahren nach einem der Ansprüche 1 bis 3, **dadurch gekennzeichnet**, daß ein Schneidvorgang als parallel zur Zeitachse verlaufende Linie wiedergegeben wird, die von der Koordinate der vor Beginn des Schnittes erreichten, festen Sattelposition ausgeht und deren Länge der Dauer des Schnittes entspricht.

5. Verfahren nach Anspruch 4, **dadurch gekennzeichnet**, daß Beginn und Ende eines Schneidvorganges zusätzlich durch eine die Sattelposition kennzeichnende Linie senkrecht zu Zeitachse markiert werden.

6. Verfahren nach einem der Ansprüche 1 bis 5, **dadurch gekennzeichnet**, daß beim Ändern der Sattelposition der Verlauf der Sattelposition als Spur der Koordinatenzeit und Sattelposition wiedergegeben wird.

7. Verfahren nach einem der Ansprüche 1 bis 5, **dadurch gekennzeichnet**, daß der Vorgang der Änderung der Sattelposition durch Erfassen der Anfangs- und Endkoordinaten für Zeit und Sattelposition und Verbinden dieser Anfangs- und Endkoordinaten durch eine gerade Linie wiedergegeben wird.

8. Verfahren nach einem der Ansprüche 1 bis 7, **dadurch gekennzeichnet**, daß Zeitabschnitte ohne Änderung der Sattelposition und ohne Schneidvorgang nicht bzw. als Nullinie der Sattelposition auf der Zeitachse dargestellt werden.

9. Verfahren nach Anspruch 8, **dadurch gekennzeichnet**, daß eine manuelle oder automatische Dateneingabe über zusätzliche Arbeitsschritte vorgenommen wird, die während der Zeitabschnitte, in welchen keine Änderung der Sattelposition und kein Schneidvorgang stattfinden, erfolgt.

10. Verfahren nach Anspruch 9, **dadurch gekennzeichnet**, daß die Informationen über zusätzliche Arbeitsschritte über ein auf Darstellungsbildschirmen wahlweise zum öffnende Fenster getrennt dargestellt werden.

11. Verfahren nach einem der Ansprüche 1 bis 10, **dadurch gekennzeichnet**, daß gleichzeitig mehrere Maschinen mit der Datenverarbeitungsanlage verbunden werden, wobei ein Datenwiedergabegerät zwischen den Darstellungen der Arbeitsabläufe verschiedener Maschinen umschaltbar ist.

12. Verfahren nach Anspruch 11, **dadurch gekennzeichnet**, daß auf einem Bildschirm mehrere Arbeitsabläufe übereinander oder perspektivisch hintereinander gleichzeitig dargestellt werden.

13. Verfahren nach einem der Ansprüche 1 bis 12, **dadurch gekennzeichnet**, daß die für die Darstellungen erforderlichen Daten vorzugsweise in komprimierter Form gespeichert werden.

14. Vorrichtung zur Überwachung und Registrierung von Arbeitsabläufen an Papierhandhabungs- und Schneidemaschinen, mit mindestens einer solchen Maschine, welche mindestens einen Sattel für den Vorschub eines Papierrieses` sowie Meß- und/oder Sensoreinrichtungen für die Erfassung bzw. Messung der genauen Sattelposition und/oder Winkellage des Sattels aufweist, und mit einer Datenverarbeitungseinrichtung, an welche die Positionsdaten des Sattels übermittelt werden, **gekennzeichnet** durch eine Wiedergabeeinrichtung für die grafische Wiedergabe der Sattelposition über der Zeit.

15. Vorrichtung nach Anspruch 14, **dadurch gekennzeichnet**, daß die Wiedergabeeinrichtung ein Bildschirm ist.

16. Vorrichtung nach Anspruch 14, **dadurch gekennzeichnet**, daß die Wiedergabeeinrichtung ein, vorzugsweise mehrkanaliger, Zeitschreiber ist.

17. Vorrichtung nach einem der Ansprüche 14 bis 16, **dadurch gekennzeichnet**, daß mehrere Maschinen über die Datenverarbeitungsstation und ein entsprechendes Steuerprogramm miteinander vernetzt sind.

18. Vorrichtung nach einem der Ansprüche 14 bis 17, **gekennzeichnet** durch Einrichtungen, welche Beginn und Ende eines Schneidvorganges erfassen und registrieren.

19. Vorrichtung nach einem der Ansprüche 14 bis 18, **gekennzeichnet** durch Einrichtungen, welche Beginn und Ende eines Verschiebe- und/oder Verdrehvorganges der Sattelposition erfassen und registrieren.

20. Vorrichtung nach einem der Ansprüche 14 bis 19, **dadurch gekennzeichnet**, daß mehrere Datensichtgeräte zur parallelen Darstellung der Arbeitsabläufe auf mehreren Maschinen vorgesehen sind.
